# EUROPEAN PATENT APPLICATION

(11) **EP 1 002 982 A2**
(43) Date of publication of application: **24.05.2000**
(21) Application number: 99120521.2
(22) Date of filing: 15.10.1999
(51) Int. Cl.: F16L 27/11

(54) **Coupling system between flange and bellows in a metallic expansion joint with corrugated bellows**

(30) Priority: 18.11.1998 IT TO980970
(71) Applicant: Sail SpA, 10129 Torino (IT)
(72) Inventor: Gai, Alessandro, 10154 Torino (IT)
(74) Representative: Robba, Eugenio

(57) **Abstract**

A coupling system between flange and bellows in a metallic expansion joint with corrugated bellows, provides for coupling a recess (9, 15, 21, 29) formed in the inner wall of a flange (5) with a projection (11, 17, 23, 31) formed in the end portion of the bellows (1) to be joined, said coupling being sealed by one or more gaskets (13, 27) located upwards of or at said coupling. In case a more tight condition and a stronger mechanical resistance to axial strains are desired, an elastic ring (19, 25, 33) is provided acting inside said projection (17, 23, 31).

## Description

This invention relates to a coupling system between flange and bellows in a metallic expansion joint made-up of corrugated bellows.

As it is known, pipelines for conveying fluids, liquids and/or gases, at various and even high pressures, presently require expansion joints or portions provided with metallic bellows, in order to compensate movements of said pipelines because of the soil configuration, of the thermal expansion of the fluid being conveyed and of additional factors such as the ground settling and so on.

These expansion joints with metallic corrugated bellows, or shortly "bellows" generally comprises a single stainless steel sheet or a plurality of such sheets, and are secured at their end portions to metallic flanges by welding, either with or without interposed sleeves.

Examples of prior art systems are described in US-A-3 876 235, US-A-4 542 715 and US-A-3 692 337 patents.

It is clear that welding the bellows to said flanges or sleeves brings about inconveniences since the flanges must necessarily be of metal, and of such a metal allowing a welding, particularly when the fluid conditions such as pressure, temperature and the like would not compulsorily require a weld and another type of quicker and less demanding fixing means - of course adapted to the intended use - would be sufficient.

In respect of the joining speed and cost it might be desirable for example to use flanges made-up of aluminium or a suitable plastic material, such as Teflon, synthetic rubber or similar. In these cases it is therefore clear that the joining by welding cannot be carried out and it is necessary to use other fixing means between the bellows and the flange in order to achieve a proper joint, such means being both adapted to the piping operating conditions and satisfactory under the functional point of view.

It is therefore an object of the present invention to overcome the above mentioned limitations of the known systems, by providing a quick and simple way to achieve the coupling or joining between flanges and bellows, which is fit for the sundry pressures, such coupling ensuring the sealing at different operating conditions as well as a reliable mechanical strength to withstand axial stresses caused by the strains generated under such operating conditions; provided that the temperature of the conveyed fluid does not exceed a predetermined value, that is about 200°C.

The above object of the invention is achieved by a system as defined in the claim 1. Further advantageous features are recited in the appended claims.

The invention will now be disclosed with particular reference to the attached drawings, supplied by way of a non limiting example, in which:
Fig. 1 is an axial cross-section view of a bellows-flange joint carried out in accordance with the prior art;
Fig. 2 is an axial cross-section view of a first embodiment of a joint between bellows and flange according to the invention, adapted for a low sealing joint and with a low mechanical resistance against axial stresses;
Fig. 3 is an axial cross-section view of a second embodiment of a bellows-flange joint, providing a higher mechanical resistance than the embodiment of Fig. 2;
Fig. 4 is an axial cross-section view of a third embodiment of bellows-flange joint, providing a still higher mechanical resistance than the one of the embodiment of Fig. 3;
Fig. 5 is an axial cross-section view of a fourth embodiment of the bellows-flange joint;
Figures 6 and 7 are enlarged axial cross-section views of details of two welding arrangements between the bellows walls of a multiply bellows.

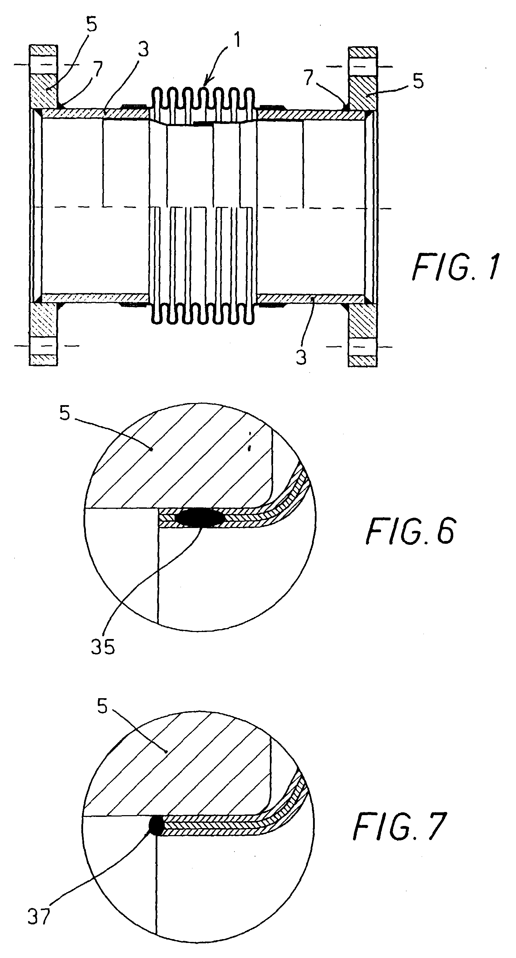

As illustrated in Fig 1, according to the prior art, the ends of a corrugated steel bellows 1 are welded to sleeves 3 that, in turn, are secured to metallic flanges 5 through welds 7. The flanges are in turn welded to pipelines elements (not shown), in particular, but not exclusively, to pipelines or conduit portions.

According to other known embodiments (not shown in the drawings), the bellows 1 can be directly secured to the flanges 5 by welding, thus eliminating the sleeves 3 shown in Fig. 1.

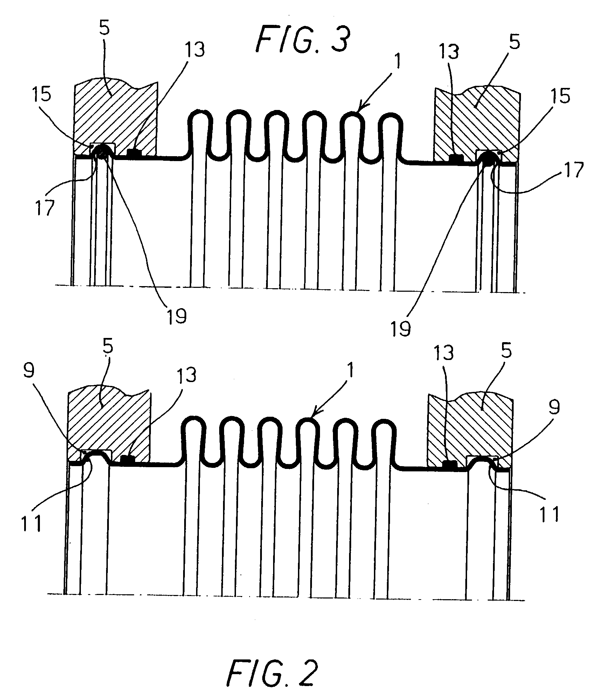

In accordance with an embodiment of the present invention, as illustrated in Fig. 2, on both the flanges 5 an annular recess 9 is formed, and on each of the cylindrical end portions of bellows 1 an outwardly radial annular projection 11 is formed, adapted to be received into the recess 9 for realising a coupling securing the bellows to the flange. On both sides a gasket 13 is located between the annular recess 11 and the corrugated portion of the bellows, i.e. "upwards" of said coupling, to ensure the joint sealing. The bellows is preferably made of stainless steel and can be of single or multiply type.

This solution is particularly convenient for pipelines in which a relatively low seal and a low mechanical strength to withstand the axial stresses are requested.

Fig. 3 illustrates a second embodiment of the invention, adapted for pipelines in which a better mechanical seal is requested. In said embodiment, to the recess-projection coupling 15, 17 one radially inner ring 19 is added, facing the projection, which strengthens said recess-projection coupling from the inside, thanks to its elastic expansion force. Also in such embodiment a sealing gasket 13 is provided upwards of the coupling.

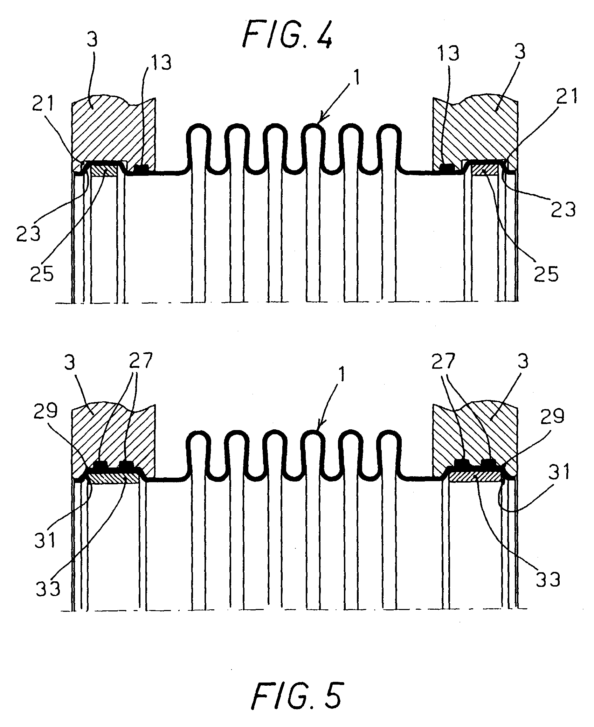

Fig. 4 illustrates a third embodiment of the invention, adapted for pipelines requiring a still better mechanical strength. In said embodiment, both the recess 21 on the flange and the projection 23 at the end portion of bellows 1 are oversized vis-a-vis the prior embodiments. More particularly, both the recess 21 and the projection 23 have a rectangular shape, and also rectangular is the transverse cross-section shape of the ring 25 pressing from the inside against the inner side of projection 23 and against the inside wall of recess 21.

Fig. 5 illustrates a fourth embodiment of the invention which differs from the preceding ones because of sealing gaskets 27 axially arranged in correspondence of the recess-projection coupling, instead of being upwardly of the coupling as provided in the preceding embodiments. The sealing gaskets are positioned radially outwardly of the bellows and radially inwardly of the flanges. More particularly, there are provided two sealing gaskets 27 on each side, received in two grooves formed in the recess 29. The projection 31 of the end portion of the bellows engages said recess and is pushed against the inner wall of recess 29 by a ring 33, having a substantially rectangular cross-section.

In case the bellows 1 of the expansion joint is a multiply bellows, to prevent the inlet of a gaseous or liquid fluid, the metal sheets forming the multiply bellows are welded to each other, at their free end portions, by a resistance weld 35 (Fig. 6) or by a TIG weld 37 (Fig. 7) .

As a result of the arrangement disclosed by the invention, in all the disclosed and illustrated embodiments, the flanges can be rotated with respect to the bellows without disassembling the joint.

## Claims

1. A coupling system between flange and bellows in a metallic expansion joint with corrugated bellows (1) arranged between pipe elements provided with flanges (5) characterised in that an annular recess (9) is formed in the inner wall of each flange (5), and that a circumferential projection (11) is formed on each of the cylindrical end portions of said bellows (1) and outwardly radially projecting therefrom, adapted to be coupled with said recess (9), and in that at least a sealing gasket (13) is provided on each side of the bellows to seal said coupling between bellows (1) and flange (5) .

2. A system as claimed in claim 1, characterised in that said sealing gasket (13) is disposed between said bellows (1) and said coupling (9, 11).

3. A system as claimed in claim 1, characterised in that said sealing gasket (13) is directly arranged on said coupling .

4. A system as claimed in claims 2 or 3, characterised in that it further comprises a ring (19), radially inwardly with respect to said projection (17), formed in the cylindrical end portions of said bellows (1), and pressing said projection (17) against the inner wall of said recess (15) housed in the flange (5).

5. A system as claimed in the preceding claims, characterised in that said recess (21) in the flange (5) is oversized and has a substantially rectangular cross-section, and in that the projection (23) of the end portion of said bellows (1) is enlarged and with a shape matching the profile of the recess (21) to which is applied, and in that the ring (25) pressing against the inner wall of said projection (23) is a ring having a rectangular cross-section.

6. A system as claimed in the preceding claims, characterised in that the recess (29) in the flange (5) has a substantially rectangular cross-section, its bottom wall has one or more grooves adapted to receive as many sealing gaskets (27), said recess extending along the whole width or thickness of flange (5), and in that the projection (31) of the end portion of said bellows (1) extends to occupy almost the whole width or thickness of flange (5), and in that the ring pressing against the inner wall of said projection (31), i.e. against the inner wall of recess (29), is a ring (33) having a rectangular section.

7. A system as claimed in any of the preceding claims, characterised in that said bellows is of multiply type and the plies forming said bellows (1) are closed by welds at their ends, said welds being either a resistance weld (35) or a TIG weld (37).

8. A system as claimed in the preceding claims, characterised in that said flanges (5) to be joined to said bellows (1) are made of aluminium or suitable plastic material such as Teflon, synthetic rubber and/or similar materials.

9. A system as claimed in the preceding claims, characterised in that said flanges (5) to be joined to said bellows (1) can be rotated with respect to it without disassembling the coupling.

10. A system as claimed in the preceding claims, characterised in that said flanges (5) are mounted to pipelines portions.
